# EUROPEAN PATENT SPECIFICATION

(11) **EP 1 903 072 B1**
(45) Date of publication and mention of the grant of the patent: **26.08.2009**
(21) Application number: 06121149.6
(22) Date of filing: 22.09.2006
(51) Int. Cl.: C08J 9/00, C08J 9/12

(54) **Integral skin polyurethane Foam Article**
Polyurethan Integralschaum Artikel
Article de mousse de polyurethane a peau intégral

(43) Date of publication of application: 26.03.2008
(73) Proprietor: DOW GLOBAL TECHNOLOGIES INC., Midland MI 48674 (US)
(72) Inventor: Blottazzi, Maurizio, 42100 Reggio Emilia (IT)
(74) Representative: Raynor, John

(56) References cited:
- WO-A-98/04606
- WO-A-20/04081075
- US-A- 5 464 880

## Description

This invention relates to new integral skin polyurethane foam articles and methods of making said articles.

It is known that polyurethane foams can be formed in a closed mould, such that the resulting compound has a foamed interior and a more compact integral skin layer. Integral skin foams of this type can be used in a variety of different areas, including automotive interior trims.

GB 1300476 discloses a method of producing an integral skin polyurethane foam formed from a polymeric polyisocyanate, a polyether polyol and a carbamate chain extender. The foam is used for crashpads, armrests and horn buttons in automobiles.

US3694530 discloses a method of producing an integral skin polyurethane foam having a low density, which is suitable for the production of interior automobile decoration trim such as door panels, sun visors and overhead padding.

US5451612 discloses integral skin polyurethanes formed using a carbonate or bicarbonate source as the blowing agent. The polyurethanes are commonly used to make products such as arm rests and dashboards.

These integral skin polyurethanes are typically used in the production of parts which have essentially the same thickness or hardness throughout the part. These polyurethanes are not suitable for production in a single moulding of a part having regions of markedly different thicknesses, because the flow properties of the reactants on injection do not allow flow through the mould before the polyurethane is formed.

Where parts of differing thicknesses are required, particularly in the automotive industry, the part is typically formed of a plastic coverstock, made from PVC or thermoplastic polyolefin (TPO) to which one or more polyurethane flexible foam sections are backfoamed to adhere them to the coverstock and to provide a "soft-touch" feeling to the part.

The disadvantage of this method is that it requires a several different process steps to produce the different layers. A further disadvantage is that the different layers are typically made of different polymer materials, which causes problems when it comes to recycling of the part.

It is desirable to provide a precursor for a foam which is capable of being formed into an integral-skinned polyurethane foam in a closed mould having different thicknesses and hardnesses and also has sufficient durability.

EP915922 discloses a method of producing integral skin polyurethane foam using a carbamate adduct formed from contacting carbon dioxide with an alkanolamine. The articles made from the polyurethane foams in the Examples of EP915922 using this technique are steering wheels. These steering wheels have uniform hardness, rather than different hardnesses. The hardness of the steering wheel is typically too high for use in side panels and dashboards in vehicles.

In a first aspect of the present invention, there is provided an article comprising an integral skin polyurethane foam section formed in a single injection step from a reaction mixture comprising:
a) at least one polyisocyanate;
b) at least one polyol; and
c) at least one carbamate blowing agent, and
wherein the polyurethane foam section comprises at least two portions, the first portion having a first surface hardness and the second portion having a second different surface hardness, wherein the first portion has an Asker C hardness of less than 60. Preferably the second portion has an Asker C hardness of greater than 60. More preferably, the first portion has an Asker C hardness of less than 55 and yet more preferably less than 50. It is preferred that the second portion has an Asker C hardness of greater than 65 and more preferably greater than 70.

Asker C hardness is measured according to ASTM 2240. The Asker hardness measurement is more suitable for measurement of the hardness of soft polymers than the more commonly used Shore A hardness. Shore A hardness values have been measured according to DIN53505.

The articles according to the present invention are advantageous in that they are soft to the touch in some portions. Asker C measurements use a rounded surface on the measuring instrument, and so provide an indication of the "indentation hardness" of a soft polymer.

It is preferred that the first portion of the polyurethane foam is at least 25 percent of the volume of the foam, preferably at least 35 percent of the volume of the foam. Preferably the second portion of the polyurethane foam is at least 10 percent of the volume of the foam and more preferably at least 25 percent of the volume of the foam.

In a second aspect of the present invention, there is provided an article comprising an integral skin polyurethane foam section formed in a single injection step from a reaction mixture comprising:
a) at least one polyisocyanate;
b) at least one polyol; and
c) at least one carbamate blowing agent, and
wherein the polyurethane foam section comprises a first portion having a first thickness and a second portion having a second different thickness, wherein the first portion has an average density of less than 500 g/l across the whole of the first thickness and the second portion has an average density of greater than 600 g/l across the whole of the second thickness. The density is measured according to DIN53479-76.

In a third aspect of the present invention, there is provided an article comprising an integral skin polyurethane foam section formed in a single injection step from a reaction mixture comprising:
a) at least one polyisocyanate;
b) at least one polyol; and
c) at least one carbamate blowing agent, and
wherein the polyurethane foam section comprises at least two portions, the first portion having a first thickness and the second portion having a second different thickness, wherein the first portion has a thickness of greater than 15mm and the second portion has a thickness of less than 2mm.

In a fourth aspect of the present invention, there is provided an article comprising an integral skin polyurethane foam section formed in a single injection step from a reaction mixture comprising:
a) at least one polyisocyanate;
b) at least one polyol; and
c) at least one carbamate blowing agent, and
wherein the polyurethane foam section comprises at least two portions, the first portion having a first surface hardness and the second portion having a second surface hardness, wherein the first surface hardness is substantially different to the second surface hardness. Preferably the surface hardness in the first portion differs from the surface hardness in the second portion by an Asker C measurement of at least 10, and more preferably at least 15.

In preferred embodiments, the polyurethane foam has the features of more than one of the first to fourth aspects of the invention.

According to the present application, a portion has substantially the same hardness, density and/or thickness over the whole of the portion. By "substantially the same", it is meant that all of the measurements of one of hardness, density and thickness are within 10 percent of each other, preferably within 5 percent and more preferably within 2 percent.

The present invention can be used in the production of different types of article, for example automobile interior part applications, such as door panels, side panels, consoles, pillars, hatchback parcel shelves and dashboards, as well as non-automobile applications such as furniture, including chairs.

The article is typically one which is substantially in the form of a panel, wherein it is shaped such that the size of the article in one dimension is significantly less than in the other dimensions. This smaller dimension is referred to herein as the thickness. It is not intended that the word "panel" should be limited to an essentially planar object. The panel can also be one having different sections, each of which has one dimension much smaller than the other two. This dimension is not necessarily the same for each section. For example, where the article is a chair, the seat and back of the chair can be formed in a single moulding, with the seat forming one section and the back another section. The thickness in this case is from top to bottom for the seat and from front to back for the back of the chair.

Preferably the article additionally comprises at least one of a rigid substrate and an in-mould coating.

In a further aspect of the present invention, there is provided a method of producing an article having an integral skin polyurethane foam section, wherein the foam section has regions with differing degrees of hardness, the integral skin polyurethane foam section being formed by injecting a reaction mixture in a single injection step into a closed mould cavity, wherein the reaction mixture comprises:
a) at least one polyisocyanate;
b) at least one polyol; and
c) at least one carbamate blowing agent;
wherein the mould cavity has regions of different thickness such that the foam section has regions of different hardness corresponding to said regions of different thickness.

It is preferred that one of the resulting regions of different hardness has an Asker C hardness of less that 60, and more preferably less than 55. Suitably, another region has an Asker C hardness of greater than 60, and preferably greater than 65. It is further preferred that the hardness of one region differs from the hardness of another region by an Asker C measurement of at least 10, and more preferably at least 15.

The method preferably comprises an additional step of providing at least one in mould coating on the inside surface of the mould prior to injection of the reaction mixture.

The method also preferably comprises the additional step of providing a rigid substrate. A suitable substrate may include any material of sufficient stiffness to proved the desired stiffness to the product. The skilled person will be aware of how to provide a rigid substrate for a foam. The rigid substrate can be inserted in the mould prior to forming the foam section, or can be attached to the foam section after formation. The polyurethane formulation of the present invention is particularly flexible in relation to the rigid substrate that can be used. One particularly suitable substrate is a low density-reinforced reaction injection moulded polyurethane substrate, as it can be recycled in combination with the polyurethane foam in a single step.

In a further aspect of the present invention, there is provided a polyurethane composition, wherein the reaction mixture comprises a carbamate blowing agent, water, a catalyst and a chain extender. Polyurethane compositions of this type are useful for producing articles according to the present invention.

Previously, it has not been considered possible to produce integral skin polyurethane foam parts using a single injection step, wherein the part has regions of different hardness. The difference in the hardness, and also the density of a part are caused by differences in the thickness of the mould cavity, and therefore of the resultant mould. Typically, where a standard polyurethane foam formulation is injected into a mould cavity having different thicknesses, problems occur when the reaction mixture flows from a narrow part of the mould to a wide part or vice versa. The change in thickness results in turbulence in the reaction mixture, and therefore production of air bubbles on the surface of the mould. This results in imperfections on the surface of the resultant part, which is then not suitable for use.

In addition, due to the changes in thickness of the mould, it is commonly difficult to inject the reaction mixture throughout the mould before polyurethane formation limits the flow. In order to achieve complete injection throughout a mould, a high pressure injection tool would be necessary. Again, this increases the turbulence in the reaction mixture resulting in bubble formation on the surface of the part.

It has now been found that when a carbamate blowing agent is used, it is possible to form foam parts in a single moulding having different thicknesses, and therefore different hardnesses, whilst at the same time having excellent surface properties. The use of the carbamate blowing agent also allows a slower injection time to be used, and therefore removes the requirement for expensive machinery to inject the reaction mixture.

The advantage of being able to produce parts of differing hardness in a single moulding is a reduction in the number of steps required to produce, for example, a door panel for a car. Reduction in the number of process steps has a significant cost saving as the parts can be produced more rapidly and fewer separate sets of moulding apparatus are required.

Any carbamate adduct which releases carbon dioxide during the polyurethane foam reaction process is suitable. Preferably, the carbamate adduct to be used is the reaction product of an amine and carbon dioxide. Suitable carbamate adducts include those disclosed in EP915922, US6346559, US6326412, DE10000494 and US5760098.

It is particularly preferred that the carbamate adduct has a thermal decomposition temperature of at least 60°C, preferably at least 75°C, and up to about 130°C. A decomposition lower than this temperature is not practical with respect to handling the adduct. Blowing agents with a a decomposition temperature higher than this have limited value when preparing a polyurethane polymer as the reaction exotherm encountered during the preparation of the polymer and which is used to effect decomposition of the adduct may not be much higher than 130°C.

The composition preferably comprises, based on the combined total weight of components (a) and (b), component (a) in an amount from 5 to 95 weight percent, and component (b) in an amount of from 95 to 5 weight percent. Advantageously, the carbamate blowing agent is present in an amount of preferably from 2.5 to 8.5, more preferably from 3.5 to 7.5, and yet more preferably in an amount of from 4.5 to 5.5 weight percent.

In a preferred embodiment, the carbamate adduct may be obtained by contacting carbon dioxide with an alkanolamine wherein the alkanolamine is a substance containing one or two ether moieties per molecule. Use of such an alkanolamine provides: firstly, for adducts which are liquid at room temperature; secondly, for adducts that have a viscosity convenient for the manufacture of polyurethane polymer; and thirdly, for adducts that are able to release a highly effective amount of carbon dioxide.

The alkanolamine can be a secondary amine but preferably is a primary amine. Primary amines exhibit a greater reactivity with respect to formation of the carbamate. When the alkanolamine is a primary amine it is characterized by the following general formula: 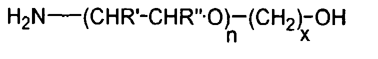 and when the alkanolamine is a secondary amine it is characterized by the following general formula: 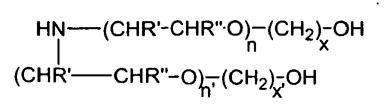 wherein, independently, R' is hydrogen, methyl or ethyl; R" is hydrogen, methyl or ethyl; the integer n or n' is 1 or 2 with the proviso that the sum of n and n' is less than 3; and the integer x or x' is a whole number of from 1 to 4. Exemplary of a suitable and preferred alkanolamine is the primary amine 2-(2-aminoethoxy)ethane or 2-(2-(2-aminoethoxy)ethoxy)ethanol.

The liquid medium component of the above mentioned composition can be an aprotic or preferably a protic substance which is a liquid at ambient temperature. By the term "ambient temperature" it is generally understood room temperature, that is 25°C. Exemplary of protic substances include a liquid diol or triol or especially a polyoxyalkylene diol or triol including (polyoxy)ethylene, (polyoxy)propylene-, or (polyoxy)butylene substances. Advantageously, to provide for end use value, the diol or triol substances correspond to reactants commonly used in the manufacture of polyurethane polymers. In the present invention notably of value as protic medium are found to be low molecular weight (polyoxy)ethylene, (polyoxy)propylene-, or a (polyoxy)butylene triols and especially diols. By the term low molecular weight it is understood substances having a molecular weight of advantageously less than 1000, preferably less than 600, and more preferably 400 or less. Substance suitable for use as the protic medium include ethylene glycol, 1,2- or 1,3-propane glycol, 1,5-pentanediol, 1,6-hexanediol, glycerine, trimethyolpropane with preferred substances including ethylene glycol, propylene glycol, dipropylene glycol, 1,2- or 1,3- or 1,4-butane diol. Also suitable as protic medium are the ethylene oxide, propylene oxide or butylene oxide adducts of the above mentioned substances having a molecular weight of less than 1000.

A preferred carbamate adduct is prepared by contacting, advantageously within a non-aqueous medium, carbon dioxide with an alkanolamine as described above. The non-aqueous liquid medium is as described above. By the term "non-aqueous" it is meant that essentially no water is present. In the event that the medium has a residual water content this should not exceed 0.5 weight percent and preferably should be less than 0.2 weight percent. The alkanolamine and medium advantageously are present in a parts by weight ratio of from 5:95 to 95:5. The alkanolamine is preferably present in a ratio of from 15:85 to 85:15, more preferably from 25:75 to 75:25, and yet more preferably in from 45:55 to 55:45. If the amount of alkanolamine present exceeds this proportion the viscosity of the resulting carbamate product may become inconveniently high. It has been found that preparing the carbamate in the presence of a protic medium helps to enhance the conversion of the alkanolamine leading to a higher yield of carbamate.

The process of contacting the carbon dioxide with the alkanolamine is preferably conducted at essentially ambient temperature and pressure with carbon dioxide being introduced at a controlled rate in an amount sufficient to obtain substantially complete conversion of the alkanolamine to carbamate. The formation of carbamate is generally an exothermic reaction; the extent of temperature rise being limited by the controlled rate of addition of the carbon dioxide and optional cooling of the reaction vessel. While it is highly convenient to use gaseous carbon dioxide at ambient temperature and pressure it is also expected that liquefied carbon dioxide can be used if suitable high pressure reactors are available. Independent of source, advantageously the water content of the carbon dioxide does not exceed 0.2, and preferably does not exceed 0.1 weight percent.

The polyol component according to the present invention is suitably at least one polyester polyol or polyether polyol. It is further preferred to use a polyether polyol, more preferably one having an average of from 2 to 4, preferably from 2 to 3 hydroxyl groups/molecule; and an average hydroxyl equivalent weight of from 500 to 5000, preferably from 1000 to 4000.

The polyol preferably has a hydroxyl number of from 25 to 40, more preferably from 25 to 35, and most preferably from 25 to 30. Optionally and advantageously, such polyether polyol may also have a primary hydroxyl content of from at least 50, preferably from at least 75, and more preferably from at least 85 percent based on total hydroxyl content of the polyol. Typically, such polyether polyols may be obtained by reaction of an active hydrogen-containing initiator with a quantity of one or more alkylene oxides to give a product of desired hydroxyl nature and equivalent weight. Generally, such alkylene oxides are C₂₋₄ alkylene oxides and include 1,4-butylene oxide, 2,3-butylene oxide, propylene oxide and ethylene oxide, preferably propylene oxide and ethylene oxide. Exemplary of suitable active hydrogen-containing initiators are polyols, polyether adducts of polyols, polyamines and other compounds having a plurality of active hydrogen atoms per molecule, such as those described in U.S. Patent 4,500,422.

Preferred initiators for use in preparing polyether polyols suitable for employment in the process of preparing the polyurethane elastomer include ethylene glycol, propylene glycol, butylene glycol, glycerine, 1,1,1-trimethylolpropane, 1,1,1-trimethylolethane, α-methylglucoside, C2-8 alkylene diamines such as, for example, ethylediamine and hexamethylenediamine, and mixtures thereof. Especially preferred are the glycol initiators or alkoxylated adducts of such glycols and glycerine. Exemplary of commercially available and preferred polyether polyols for use in manufacturing a polyurethane elastomer by the process of this invention are those polyether polyols identified by the trademark "VORANOL" and include products designated as VORANOL EP 1900 and VORANOL CP 6001, sold by The Dow Chemical Company.

It is yet further preferred that a mixture of polyols are used. It is particularly preferred that the mixture comprises at least one triol and at least one diol.

In addition to the polyols described herein above other suitable polyols which may be present in the process of preparing the polyurethane elastomer include the so-called polymer polyols based on polyether polyols such as those described in U.S. Patent 4,394,491. Among the useful polymer polyols are included dispersions of vinyl polymers, particularly styrene/acrylonitrile copolymers, in a continuous polyether polyol phase. Also useful are the so-called polyisocyanate polyaddition (PIPA) polyols (dispersions of polyurea-polyurethane particles in a polyol) and the polyurea dispersions in polyol such as, for example, PHD polyols. Copolymer polyols of the vinyl type are described in, for example, U.S. Patents 4,390,645; 4,463,107; 4,148,840 and 4,574,137. Further to the above described polyether polyols and copolymers polyols it is also possible to use in admixture with the above, polyether and polyester polyols generally associated with the manufacture of hard, rigid polyurethane foams. Polyols as generally associated with the manufacture of rigid polyurethane foam are characterized by an average functionality of from 2 to 8, preferably from 3 to 8, in that they have an average hydroxyl equivalent weight of from 50 to 200.

Suitable polyester polyols may, for instance, be produced from dicarboxylic acids, preferably aliphatic dicarboxylic acids, having 2 to 12 carbon atoms in the alkylene radical, and multifunctional alcohols, preferably diols. These acids include, for instance, aliphatic dicarboxylic acids such as glutaric acid, pimelic acid, suberic acid, azelaic acid, sebasic acid, undecanedioic acid, dodecanedioic acid, and preferably, succinic and adipic acids; cycloaliphatic dicarboxylic acids such as 1,3- and 1,4-cyclohexane dicarboxylic acid; and aromatic dicarboxylic acids such as phthalic acid and terephthalic acid. Examples of di- and multifunctional, particularly difunctional, alcohols are: ethylene glycol, diethylene glycol, propylene glycol, dipropylene glycol, 1,3-propanediol, 1,10-decanediol, glycerine, trimethylolpropane, and preferably, 1,4-butanediol, and 1,6-hexanediol.

Suitable polyisocyanates for use in the present invention include aliphatic, cycloaliphatic, araliphatic and preferably aromatic polyfunctional isocyanates.

Specific examples are: alkylene diisocyanates having from 4 to 12 carbon atoms in the alkylene radical, for example dodecane 1,12- diisocyanate, 2-ethyltetramethylene 1,4-diisocyanate, 2- methylpentamethylene 1,5-diisocyanate, tetramethylene 1,4-diisocyanate and preferably hexamethylene 1,6-diisocyanate; cycloaliphatic diisocyanates such as cyclohexane 1,3- and 1,4-diisocyanate and also any mixtures of these isomers, 1-isocyanato-3,3,5-trimethyl-5- isocyanatomethylcyclohexane (isophorone diisocyanate), hexahydrotolylene 2,4- and 2,6-diisocyanate and also the corresponding isomer mixtures, dicyclohexylmethane 4,4'-, 2,2'- and 2,4'-diisocyanate and also the corresponding isomer mixtures, and preferably aromatic diisocyanates and polyisocyanates, such as tolylene 2,4-and 2,6-diisocyanate and the corresponding isomer mixtures, diphenylmethane 4, 4'-, 2,4'-and 2,2'- diisocyanate and the corresponding isomer mixtures, mixtures of diphenylmethane 4,4'- and 2,4'-diisocyanates, polyphenylpolymethylene polyisocyanates, mixtures of diphenylmethane 4,4'-, 2,4'- and 2,2'- diisocyanates and polyphenylpolymethylene polyisocyanates (raw MDI) and mixtures of raw MDI and tolylene diisocyanates. The organic diisocyanates and polyisocyanates can be used individually or in the form of their mixtures.

In one preferred embodiment, a polyurethane prepolymer is used. The prepolymer is formed from the reaction of a multifunctional compound, selected from amine, alcohol and isocyanate, at least one polyurethane and at least one polyol or polyamine. Preferably the prepolymer is based on an aromatic polyisocyanate, such as MDI or TDI.

When producing integral-skinned foams, the polyisocyanate commonly has an isocyanate content of from 25 to 35 weight percent. However, the applicant has found that, surprisingly, in the present invention, a superior product is formed when a lower isocyanate content is used. It is preferred to use an isocyanate content of from 19 to 25 weight percent, preferably from 20 to 23 weight percent.

One preferred polyisocyanate component used is a urethane-modified polyisocyanate, and especially a urethane-modified aromatic polyisocyanate. The preferred urethane-modified aromatic polyisocyanates are those obtained by reacting an excess of toluene diisocyanate or preferably a methylene diphenylisocyanate with a polyol that is a polyester or preferably a polyether polyol and notably a diol or triol. Applicants have found that methylene diphenylisocyanate modified by reaction with low molecular weight glycol or high molecular weight polyol are equally suitable for this invention. By the term "high molecular weight" it is meant polyols having a molecular weight of 1000 or more. The techniques for preparing such urethane-modified polyisocyanates are well documented in the open literature and will not be further reported herein.

When preparing a polyurethane polymer according to this invention, the polyisocyanate is used in an amount to provide for an isocyanate reaction index of advantageously from 80 to 120, preferably from 90 to 110, and more preferably from 95 to 105. By the term "isocyanate index" it is understood that at an index of 100, that one equivalent of isocyanate is present for each isocyanate reactive hydrogen atom present from the polyol, or other active hydrogen atom bearing substance able to react with the polyisocyanate.

When preparing a polyurethane elastomer as disclosed herein, optionally and advantageously the polyether or polyester polyol is used in admixture with a chain extending agent. The presence of a chain extending agent is useful in the provision of desirable physical properties, especially hardness, of the resulting foam. The chain-extending agent advantageously is used in an amount of less than 6 weight percent, preferably from 2 to 4 weight percent based on total weight of the polyether polyol and chain extending agent.

The chain-extending agent is characterized in that it is an isocyanate-reactive substance, especially an organic difunctional isocyanate-reactive substance that has an equivalent weight of less than or equal to 150 and preferably less than or equal to 100. Representative of suitable chain-extending agents include polyhydric alcohols, aliphatic diamines including polyoxyalkylenediamines, aromatic diamines and mixtures thereof. Preferred chain extending agents are dihydroxyl compounds, especially glycols. Illustrative of suitable chain-extending agents include 1,2-ethanediol, 1,3-propanediol, 1,5-pentanediol, 1,6-hexanediol, 1,2-propanediol, 1,3-butanediol, 1,4-butanediol, 1,6-hexanediol, 1,4-cyclohexanediol, 1,4-cyclohexanedimethanol, ethylenediamine 1,4-butylenediamine and 1,6-hexamethylenediamine. Compounds such as ethoxylated hydroquinone can also be employed as a chain-extending agent. The above mentioned chain extending agents can be used singularly or combined or in admixture with other compounds including diethylene glycol, dipropylene glycol, tripropylene glycol, ethanolamine, diethanolamine, triethanolamine and N-methyldiethanolamine, and N-ethyldiethanolamine, as well as adducts obtained by esterification of aliphatic carboxylic acids with aliphatic diols or triols such as those exemplified above utilizing from 0.01 to 1.08 mole of acid per mole of diol/triol. While any of the chain extending agents exemplified above can be employed in the process of preparing the polyurethane elastomer, it is particularly preferred to use 1,4-butanediol, 1,6-hexanediol, neopentyl glycol, 1,4-cyclohexane diol, ethylene glycol, bis-hydroxyethoxybenzene, ethoxylated hydroquinone glycerine, and diethylene glycol either alone or in admixture. Especially preferred as chain-extending agent is 1,2-ethanediol. When preparing RIM-type polyurethane foam products optionally present can be a crosslinking agent, such agents are substances having an isocyanate-reactive hydrogen functionality of greater than 2, and preferably of 3 or more such as exemplified by glycerine.

It is preferable to use at least one catalyst in the reaction mixture. Any catalyst which is suitable for the production of polyurethane can be used, including radical and non-radical catalysts.

Suitable catalysts include the well known polyurethane catalysts such as are described at column 6 of U. S. patent No. 5,817,860.

Such catalysts include include salts and chelates of tin, zinc, bismuth, iron, and mercury, as well as tertiary amine compounds. Organotin catalysts such as stannous octoate, stannous oleate, stannic chloride, dimethyltin dilaurate and dibutyltin dilaurate are preferred metallic catalysts. Suitable tertiary amine catalysts include triethylenediamine (which is commercially available as a 33 percent by weight solution), trimethylamine, triethylamine, N-methylmorpholine, N-ethylmorpholine, N-coco-morpholine, 1-methyl-4-dimethylaminoethyl piperazine, 3-methoxy-N- dimethylpropyl amine, N, N-dimethyl-N',N'-methylisopropylpropylenediamine, N, N'- diethylaminopropylamine, N,N-dimethylbenzylamine, N,N-dimethylethanolamine, N, N-dimethylpiperazine, 1,4-diazobicyclo [2,2, 2] octane, bis (dimethylaminoethyl) ether, bis (2-dimethylaminoethyl) ether, morpholine, N, N-dimorpholine diethylether, N, N-dimethylcyclohexylamine, 4,4'-(oxydi-2, 1-ethanediyl) bis, and pentamethylene diamine. The catalyst is conveniently dissolved or dispersed in the isocyanate-reactive component or the isocyanate component.

The amount of catalyst is selected to provide a desired reaction rate. Sufficient catalyst to provide a gel time (per the test described below) of 15-50 seconds, preferably from 25-40 seconds, more preferably from 28-35 seconds is desirable in most applications.

Classical (fugitive) catalysts may be employed in the practice of the invention, but it is particularly preferred to use a non-fugitive catalyst, such as those disclosed in WO2004/081075. By non-fugitive urethane catalyst it is understood a substance wich is able to promote the formation of urethane from the reaction of isocyanate with a polyol wherein such catalyst by virtue of bearing an isocyanate reactive moiety ultimately becomes bound and fixed into the resulting urethane polymer. The non-fugitive urethane catalyst is preferably a reactive amine catalyst, preferably a tertiary amine catalyst, having as reactive moiety a hydroxyl, a primary or secondary amine group, or thiol.

Preferred as non-fugitive amine catalysts for this invention are those substances that are tertiary amine catalysts having an amine group as the reactive moiety. Exemplary of suitable reactive amine catalysts bearing a hydroxyl group include N, N,N'-trimethyl-N-hydroxyethyl-bisaminoethyl ether commercially available as JEFFCAT ZF-10, N, N-bis (3-dimethylaminopropyl)-N-isopropanol amine commercially available as JEFFCAT ZR-50 ; N- (3-dimethylaminopropyl) -N, N- diisopropanolamine commercially available as JEFFCAT DPA; N, N-dimethylethanolamine commercially available as JEFFCAT DMEA; 2- (2-dimethylaminoethoxy) ethanol commercially available as JEFFCAT ZR-70; all available from Huntsman Corp.

Other suitable reactive amine catalysts bearing a hydroxyl group are as mentioned in the published patent application US2002/0025989, column paragraphs 17 and 18. Illustrative of reactive amine catalysts bearing an amine group includes 3-dimethylaminopropylurea and 3-dimethylaminopropylamine and adducts thereof. Exemplary of commercially available reactive amine catalysts understood as having an amine reactive moiety include the following proprietary products DABCO NE200 and DABCO NE1060 available from Air Products; and TOYOCAT RX20, TOYOCAT RX21 and TOYOCAT RX30 available from the Tosoh Corporation. The non-fugitive amine catalyst is present in an effective amount for the purpose of preparing the polyurethane foam. Such amount will be dependent on the nature and reactivity of the materials and reactants present but typically is from 0.01 to 3 parts, preferably from 0.1 to 2.5 parts, and more preferably in from 0.2 to 2 parts by weight per 100 parts by weight of polyol.

Particularly preferred catalysts include diazobicyclo 2,2,2 octane, such as Dabco 33 LB and Teda 33% in MEG; dioctyltin dicarboxylate, such as Fomrez UL 38 from Crompton; diethanol amine; reactive blends of modified dimethyl amino propyl amine, such as Toyocat RX 20 from Tosoh; bis(N,N Dimethylamino)ethoxy)ethanol such as Polycat 15 from Air Products; and sterically hindered catalysts such as Niax EF 708 from GE.

To supplement the blowing action provided by the carbamate adduct, optionally present can be other physical and chemical blowing agents as known to a person skilled in the art. However, where other blowing agents are used, it is preferred that they provide make up a very minor part of the blowing effect. Preferably no other blowing agents are present.

Where other blowing agents are used, they are preferably used in an amount of less that 3 weight percent.

As mentioned herein above, the polyurethane elastomer polymer is prepared in the presence of carbon dioxide, generated through the thermal decomposition of the carbamate, as a blowing agent. In addition to the carbamate also present can be other blowing means including water, aliphatic or alicyclic C₃₋₈ alkanes, or a chlorine-free halogenated alkane, or mixtures thereof. Water, if present, is typically employed in an amount of from 0.05 to 2, preferably from 0.1 to 1.5 and more preferably from 0.1 to 0.3 weight percent, based on the total weight of the polyol and optional chain-extending agent present. Exemplary of suitable aliphatic or alicyclic C₃-C₈ alkanes include butane, n-pentane, i-pentane, hexane, cyclopentane and cyclohexane. Exemplary of suitable chlorine-free halogenated alkanes include di-, tri-, and tetrafluoroethane.

Optionally but advantageously present when preparing the polyurethane polymer are additional additives including surfactants, organic or morganic fillers, pigments, fire retardants, antioxidants, and antistatic agents. The use of such additives is well known in the art and reference is made thereto for this purpose.

Suitable surfactants include the diverse silicone surfactants, preferably those which are block copolymers of a polysiloxane and a polyoxyalkylene. Exemplary of such surfactants are the products DC-193 and Q4-3667 available from Dow Corning and TEGOSTAB B4113 available from Goldschmidt. When present, the amount of surfactants advantageously employed is from 0.1 to 2, and preferably from 0.2 to 1.3 percent by total weight of the polyol and optional chain extending agent. Other suitable surfactants also include non-silicone containing surfactants, such as poly(alkyleneoxides).

Suitable pigments and fillers include for example calcium carbonate, graphite, carbon black, titanium dioxide, iron oxide, alumina trihydrate, wollastonite, prepared glass fibres dropped or continuous, polyesters and other polymeric fibres. Exemplary of other organic fillers include cellulose, wood fibre and polyurethane regrind.

Suitable methods of intimately mixing the urethane-modified polyisocyanate with the polyol include molding techniques such as described in, for example, "Polyurethanes Handbook" by Günter Oertel Hanser Publishes Munich ISBN 0-02-948920-2 (1985). Other suitable methods for preparing microcellular and elastomeric polyurethane polymers are described, for example, in U.S. Patents 4,297,444; 4,218,543; 4,444,910; 4,530,941 and 4,269,945.

The polyurethane elastomer disclosed herein is preferably a microcellular polyurethane elastomer. Such an elastomer is typically prepared by intimately mixing the reaction components at room temperature or a slightly elevated temperature for a short period and injecting the resulting mixture into a closed mold, which is heated. Upon completion of the reaction, the mixture takes the shape of the mold to produce a polyurethane elastomer of a predefined structure, wich can then be sufficiently cured and removed from the mold with a minimum risk of incurring deformation greater than that permitted for its intended end application. Suitable conditions for promoting the curing of the elastomer include a mold temperature of typically from 20°C to 150°C, preferably from 35°C to 75°C, and more preferably from 45°C to 55°C. Such temperatures generally permit the sufficiently cured elastomer to be removed from the mold typically in less than 10 minutes and more typically in less than 5 minutes after intimately mixing the reactants. Optimum cure conditions will depend on the particular components including catalysts and quantities used in preparing the elastomer and also the size and shape of the article manufactured.

The polyurethane precursor of the present invention is particularly suited for use in forming articles which have different thicknesses. The different thicknesses of the foam allow for the article to have regions of different hardness and different density, dependent on the thickness. Accordingly, according to the present invention, an article can be formed from a single injection step, wherein the article has some sections which are thicker and therefore are softer to the touch, and other sections are thinner and harder to the touch. For example, a chair could be formed which consists of sections of thicker foam for the seating portion and more rigid, thinner sections for the arms and/or legs.

The polyurethane elastomer disclosed herein is useful in the preparation of articles such as, for example, automobile interior trims such as door and roof panels, and dashboards as well as non-automobile applications such as chairs and other furniture items.

Preferred embodiments of the invention will now be described with reference to the following drawings in which:-
Figures 1 to 3 are graphs showing fresh and aged results for compositions according to the present invention for the tear strength, the tensile strength and the elongation at break;
Figure 4 shows the cross section of a panel according to the present invention, including density and hardness measurements.

The following examples are provided to illustrate the invention but are not intended to limit the scope thereof. All parts and percentages are given by weight unless otherwise indicated. Material used in the examples are identified as follows:
POLYOL
   - Polyol 1: Glycerine based polyol, ethylene oxide capped, hydroxyl number of 28, functionality 3
   - Polyol 2: Molecular weight 4000, hydroxyl number of 28, functionality 2
   - Polyol 3: Glycerine/sorbitol polyol, hydroxyl number of 32.4, functionality > 3
POLYISOCYANATE
   - Polyol 4: MDI prepolymer with polyether polyols NCO % 20.1
   - Polyol 5: MDI prepolymer hybrid polyether/polyester NCO % 23.0
CARBAMATE ADDUCT
   - Specflex NR 556: CO2 / aliphatic amine adduct
CATALYST
   - Catalyst 1: Diazobicyclo 2,2,2 octane 33% in ethylene glycol
   - Catalyst 2: Dioctyltin dicarboxylate from Crompton
   - Catalyst 3: Diethanol amine
   - Catalyst 4: sterically hindered catalyst (GE NIAX EF708)
CHAIN EXTENDER
   Ethylene glycol (MEG)
   Di-ethylene glycol (DEG)

The Examples were produced according to processing parameters in Table 1.

**Table 1**

| | **Unit** | **Processing Parameters** |
|---|---|---|
| Ratio by weight | Iso/Pol | 0.59 |
| Isocyanate Tank pressure | bar | 2.0 |
| Polyol Tank pressure | bar | 3.0 |
| Polyol Air Nucleation level | % | 15-18 |
| Total Output | g/s | 400 |
| Isocyanate Tank Temperature | °C | 40 |
| Polyol Tank Temperature | °C | 40 |
| Mixing Head | - | Cannon FPL 14 |
| Polyol injector (kind) | mm | (static) 2 |
| Isocyanate Injector (kind) | mm | (orange) 903 |
| Isocyanate Pressure | bar | 190 |
| Polyol Pressure | bar | 170 |
| Shot Time | S | 4 - 6 |
| Mold Temperature | °C | 65 |
| De-Mold Time | s | 30-90 |
| Releasing agent | - | ACMOS 36-4536 |
| In Mold Coating | - | ISOTHAN WB 15020 Black ISOTHAN WB 15018 Gray |

### Examples 1 and 2

The ingredients excluding the polyisocyanate were mixed together in the amounts according to Table 2 below, based on weight percent

**Table 2**

| | Ex | Ex 2 |
|---|---|---|
| Polyol 1 | 56.47 | 54.85 |
| Polyol 2 | 34.90 | 34.90 |
| Specflex NR 556 | 4 | 4 |
| Catalyst 3 | 0 | 0.3 |
| Catalyst 1 | 2 | 0 |
| Catalyst 2 | 0.03 | 0.05 |
| Catalyst 4 | 0 | 2.00 |
| Water | 0.30 | 0.30 |
| MEG | 1.30 | 2.60 |
| DEG | 1 | 1 |
| Total | 100 | 100 |

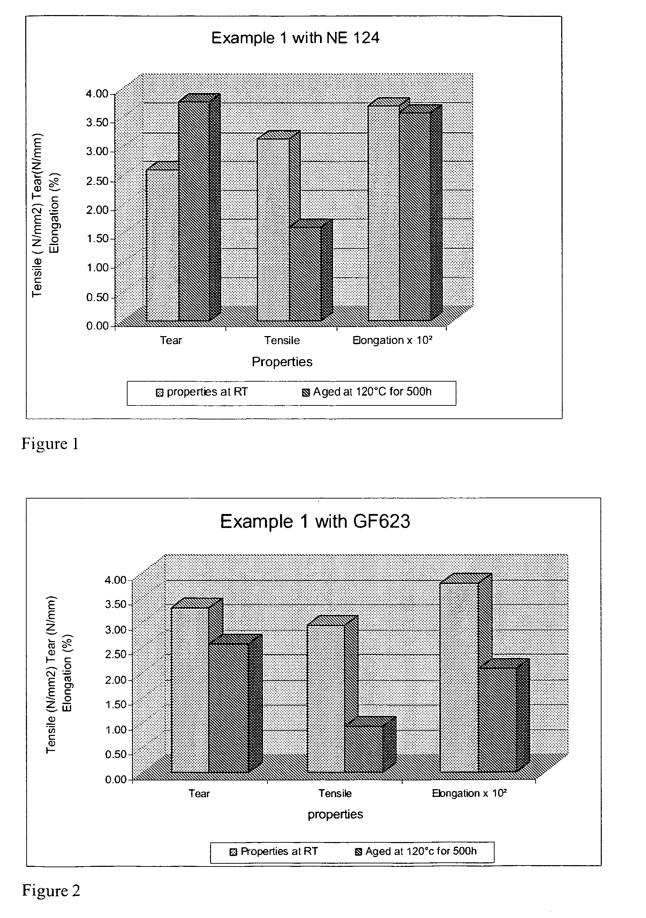

The mixture was then mixed with a polyisocyanate as shown in Table 3 at the a variety of different isocyanate indexes as shown. The resultant mixture was injected into a mould. The resultant foams were then tested for density (according to DIN53479-76), hardness (Shore A according to DIN 53505), tear strength (according to DIN 53507), tensile strength (according to DIN 53543) and elongation at break (according to DIN 53543). Some of the foams were then retested after ageing for 504 hours (21 days) at 120°C. The results are shown in Table 3 and Figures 1 to 3.

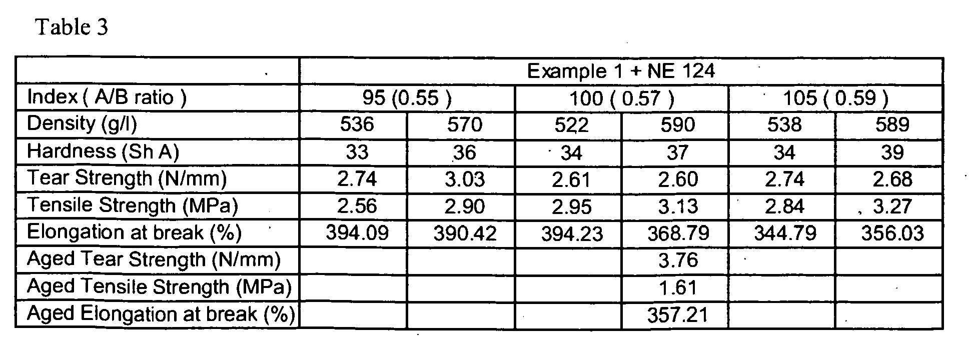

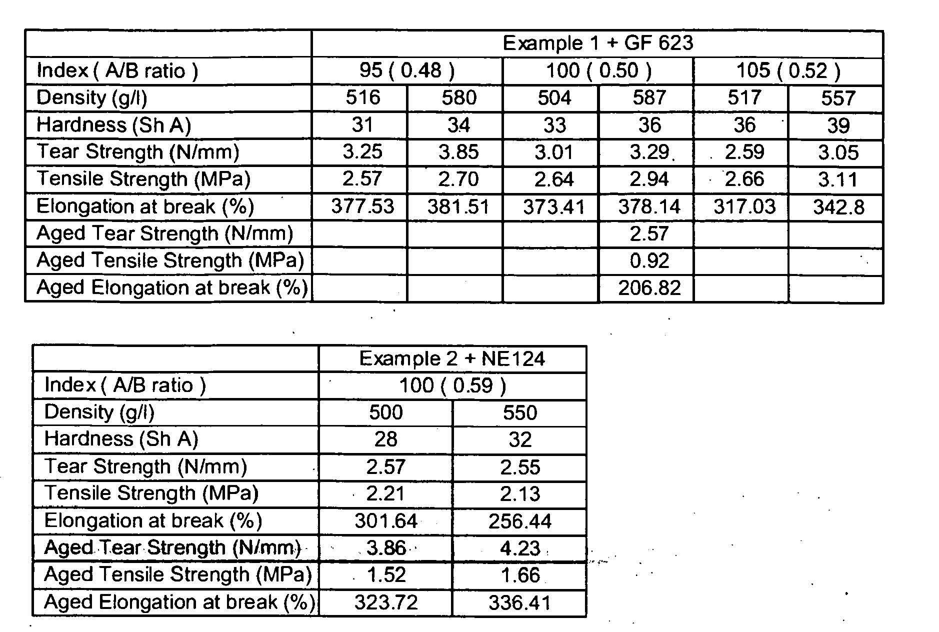

As can be seen from the results above, the foams according to the present invention have excellent hardness, tear strength, tensile strength and elongation. Furthermore, it can be seen that even after ageing, the properties of the foams are comparable, and in some cases even superior to the properties prior to ageing.

These foams are therefore suitable for use for example as automobile interior parts, where it is important that the foam has good aged properties.

### Examples 3 to 8

Tests were also undertaken on a number of parts made using a base formulation as shown in Table 4.

**Table 4**

| | wt % |
|---|---|
| Polyol 1 | 53.80 |
| Polyol 2 | 33.88 |
| Specflex NR 556 | 9.20 |
| Catalyst 3 | 0.3 |
| Catalyst 2 | 0.02 |
| Catalyst 4 | 0.50 |
| Water | 0.30 |
| DEG | 1.00 |
| Carbon Black | 1.00 |

The polyol side above was mixed with Specflex NE 124 in a isocyanate index of 100 to 103. The processing parameters were the same as above. Moulded parts were produced in the shape of an automobile door panel, in which the panel wall had a portion of thickness up to 40mm and a portion of thickness as low as 1mm. Seven separate hardness measurements were taken for each part at set positions on the part. An average has been taken for the results for each part type, as shown below in Table 4. Measurements at 1 to 6 are on the thicker part of the panel, whereas the measurement at 7 is on a thinner part of the panel.

Example 3 is a foam backed with a wood fibre composite substrate. Examples 4 to 6 are foams backed with a low density-reinforced reaction injection moulded (LD-RRIM) substrate. Example 5 has a low thickness skin and Example 6 has a high thickness skin. Examples 7 and 8 are foams without substrate backings. Example 8 has a low thickness skin.

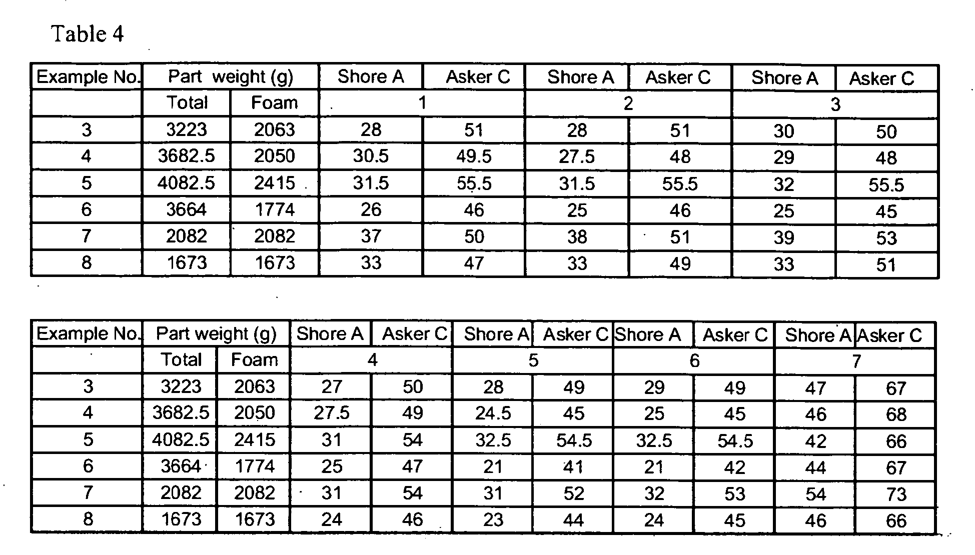

It can be seen that some parts of the door panel have an Asker C hardness as low as 41, whereas the thinner parts of the panel have an Asker C hardness of as high as 73.

The formulations above allow the formation of an article with improved demould time which can be as low as 30s or even lower, depending on the shape of the article and the substrate used.

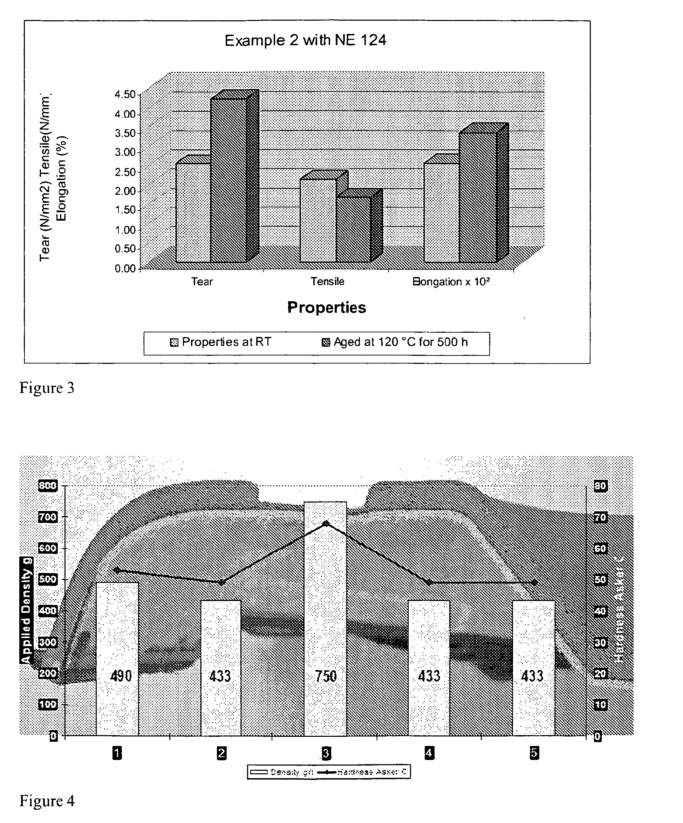

A cross-section of a foam produced according to the present invention can be seen in Figure 4. The foam is mounted on a rigid substrate. As can be seen, the thin portion of the foam section has significantly higher density and Asker C hardness compared with the thicker portion. This cross-section clearly demonstrates how a foam having portions of significantly different thickness can be produced in a single injection step according to the present invention.

## Claims

1. An article comprising an integral skin polyurethane foam section formed in a single injection step from a reaction mixture comprising:
a) at least one polyisocyanate;
b) at least one polyol; and
c) at least one carbamate blowing agent, and
wherein the polyurethane foam section comprises at least two portions, the first portion having a first surface hardness and the second portion having a second different surface hardness, wherein the first portion has an Asker C hardness of less than 60.

2. An article as claimed in claim 1, wherein the second portion has an Asker C hardness of greater than 60.

3. An article as claimed in claim 1 or claim 2, wherein the first portion has an Asker C hardness of less than 55.

4. An article as claimed in any one of the preceding claims, wherein the second portion has an Asker C hardness of greater than 65.

5. An article as claimed in any one of the preceding claims, wherein the foam section has a volume and wherein the first portion of the polyurethane foam is at least 25 percent of the total volume of the foam section and the second portion of the polyurethane foam is at least 10 percent of the total volume of the foam section.

6. An article comprising an integral skin polyurethane foam section formed in a single injection step from a reaction mixture comprising:
a) at least one polyisocyanate;
b) at least one polyol; and
c) at least one carbamate blowing agent, and
wherein the polyurethane foam section comprises a first portion having a first thickness and a second portion having a second different thickness, wherein the first portion has an average density of less than 500 g/l across the whole of the first thickness and the second portion has an average density of greater than 600 g/l across the whole of the second thickness.

7. An article comprising an integral skin polyurethane foam section formed in a single injection step from a reaction mixture comprising:
a) at least one polyisocyanate;
b) at least one polyol; and
c) at least one carbamate blowing agent, and
wherein the polyurethane foam section comprises at least two portions, the first portion having a first thickness and the second portion having a second different thickness, wherein the first portion has a thickness of greater than 15mm and the second portion has a thickness of less than 2mm.

8. An article comprising an integral skin polyurethane foam section formed in a single injection step from a reaction mixture comprising:
a) at least one polyisocyanate;
b) at least one polyol; and
c) at least one carbamate blowing agent, and
wherein the polyurethane foam section comprises at least two portions, the first portion having a first surface hardness and the second portion having a second surface hardness, wherein the first surface hardness is substantially different to the second surface hardness.

9. An article as claimed in claim 8, wherein the surface hardness in the first portion differs from the surface hardness in the second portion by an Asker C measurement of at least 10.

10. An article as claimed in any one of the preceding claims, wherein the reaction mixture additionally comprises at least one chain extender.

11. An article as claimed in any one of the preceding claims, wherein the article additionally comprises at least one of a rigid substrate and an in-mould coating.

12. An article as claimed in any one of the preceding claims, wherein the reaction mixture additionally comprises at least one catalyst.

13. An article as claimed in any one of the preceding claims, wherein the polyol is polyether polyol.

14. An article as claimed in any one of the preceding claims, wherein the polyisocyanate is an aromatic polyfunctional isocyanate.

15. A method of producing an article having an integral skin polyurethane foam section, wherein the foam section has regions with differing degrees of hardness, the integral skin polyurethane foam section being formed by injecting a reaction mixture in a single injection step into a closed mould cavity, wherein the reaction mixture comprises:
a) at least one polyisocyanate;
b) at least one polyol; and
c) at least one carbamate blowing agent;
wherein the mould cavity has regions of different thickness such that the foam section has regions of different hardness corresponding to said regions of different thickness.

16. A method as claimed in claim 15, wherein one of the resulting regions of different hardness has an Asker C hardness of less that 60 and another region has an Asker C hardness of greater than 60.

17. A method as claimed in claim 15 or claim 16 comprising the step of providing at least one in mould coating on the inside surface of the mould prior to injection of the reaction mixture.

18. A method as claimed in any one of claims 15 to 17, comprising the step of providing a rigid substrate.

19. A method as claimed in any one of claims 15 to 18, wherein the reaction mixture additionally comprises a chain extender.

20. An article as claimed in any one of claims 1 to 14, wherein the article is an automobile interior part.

## Patentansprüche

1. Gegenstand mit einem Polyurethanintegralschaumprofil, das in einem einzigen Einspritzschritt aus einem Reaktionsgemisch hergestellt wurde, das Folgendes umfasst:
a) mindestens ein Polyisocyanat;
b) mindestens ein Polyol; und
c) mindestens ein Carbamat-Treibmittel, und
wobei das Polyurethanschaumprofil mindestens zwei Abschnitte umfasst, wobei der erste Abschnitt eine erste Oberflächenhärte besitzt und der zweite Abschnitt eine davon verschiedene zweite Oberflächenhärte besitzt, wobei der erste Abschnitt eine Asker C Härte kleiner als 60 besitzt.

2. Gegenstand nach Anspruch 1, wobei der zweite Abschnitt eine Asker C Härte größer als 60 besitzt.

3. Gegenstand nach Anspruch 1 oder Anspruch 2, wobei der erste Abschnitt eine Asker C Härte kleiner als 55 besitzt.

4. Gegenstand nach einem der vorhergehenden Ansprüche, wobei der zweite Abschnitt eine Asker C Härte größer als 65 besitzt.

5. Gegenstand nach einem der vorhergehenden Ansprüche, wobei das Schaumprofil ein Volumen besitzt und wobei der erste Abschnitt des Polyurethanschaums mindestens 25 Prozent des Gesamtvolumens des Schaumprofils ausmacht und der zweite Abschnitt des Polyurethanschaums mindestens 10 Prozent des Gesamtvolumens des Schaumprofils ausmacht.

6. Gegenstand mit einem Polyurethanintegralschaumprofil, das in einem einzigen Einspritzschritt aus einem Reaktionsgemisch hergestellt wurde, das Folgendes umfasst:
a) mindestens ein Polyisocyanat;
b) mindestens ein Polyol; und
c) mindestens ein Carbamat-Treibmittel, und
wobei das Polyurethanschaumprofil einen ersten Abschnitt mit einer ersten Dicke und einen zweiten Abschnitt mit einer davon verschiedenen zweiten Dicke umfasst, wobei der erste Abschnitt eine durchschnittliche Dichte kleiner als 500 g/l über die gesamte erste Dicke besitzt und der zweite Abschnitt eine durchschnittliche Dichte größer als 600 g/l über die gesamte zweite Dicke besitzt.

7. Gegenstand mit einem Polyurethanintegralschaumprofil, das in einem einzigen Einspritzschritt aus einem Reaktionsgemisch hergestellt wurde, das Folgendes umfasst:
a) mindestens ein Polyisocyanat;
b) mindestens ein Polyol; und
c) mindestens ein Carbamat-Treibmittel, und
wobei das Polyurethanschaumprofil mindestens zwei Abschnitte umfasst, wobei der erste Abschnitt eine erste Dicke besitzt und der zweite Abschnitt eine davon verschiedene zweite Dicke besitzt, wobei der erste Abschnitt eine Dicke größer als 15 mm besitzt und der zweite Abschnitt eine Dicke kleiner als 2 mm besitzt.

8. Gegenstand mit einem Polyurethanintegralschaumprofil, das in einem einzigen Einspritzschritt aus einem Reaktionsgemisch hergestellt wurde, das Folgendes umfasst:
a) mindestens ein Polyisocyanat;
b) mindestens ein Polyol; und
c) mindestens ein Carbamat-Treibmittel, und
wobei das Polyurethanschaumprofil mindestens zwei Abschnitte umfasst, wobei der erste Abschnitt eine erste Oberflächenhärte besitzt und der zweite Abschnitt eine zweite Oberflächenhärte besitzt, wobei sich die erste Oberflächenhärte von der zweiten Oberflächenhärte wesentlich unterscheidet.

9. Gegenstand nach Anspruch 8, wobei sich die Oberflächenhärte des ersten Abschnitts von der Oberflächenhärte des zweiten Abschnitts um ein Asker C Maß von mindestens 10 unterscheidet.

10. Gegenstand nach einem der vorhergehenden Ansprüche, wobei das Reaktionsgemisch außerdem mindestens einen Kettenverlängerer umfasst.

11. Gegenstand nach einem der vorhergehenden Ansprüche, wobei der Gegenstand außerdem mindestens eines von einem starren Substrat und einer IMC-Beschichtung umfasst.

12. Gegenstand nach einem der vorhergehenden Ansprüche, wobei das Reaktionsgemisch außerdem mindestens einen Katalysator umfasst.

13. Gegenstand nach einem der vorhergehenden Ansprüche, wobei das Polyol Polyetherpolyol ist.

14. Gegenstand nach einem der vorhergehenden Ansprüche, wobei das Polyisocyanat ein aromatisches polyfunktionelles Isocyanat ist.

15. Verfahren zur Herstellung eines Gegenstands mit einem Polyurethanintegralschaumprofil, wobei das Schaumprofil Bereiche mit unterschiedlichen Härtegraden besitzt, wobei das Polyurethanintegralschaumprofil hergestellt wird durch Einspritzen eines Reaktionsgemisches in einem einzigen Einspritzschritt in einen geschlossenen Formhohlraum, wobei das Reaktionsgemisch Folgendes umfasst:
a) mindestens ein Polyisocyanat;
b) mindestens ein Polyol; und
c) mindestens ein Carbamat-Treibmittel,
wobei der Formhohlraum Bereiche unterschiedlicher Dicke besitzt, so dass das Schaumprofil Bereiche unterschiedlicher Härte besitzt, die diesen Bereichen unterschiedlicher Dicke entsprechen.

16. Verfahren nach Anspruch 15, wobei einer der resultierenden Bereiche unterschiedlicher Härte eine Asker C Härte kleiner als 60 besitzt und ein anderer Bereich eine Asker C Härte größer als 60 besitzt.

17. Verfahren nach Anspruch 15 oder Anspruch 16, mit dem Schritt des Bereitstellens mindestens einer IMC-Beschichtung auf der Innenseite der Form vor dem Einspritzen des Reaktionsgemisches.

18. Verfahren nach einem der Ansprüche 15 bis 17, mit dem Schritt des Bereitstellens eines starren Substrats.

19. Verfahren nach einem der Ansprüche 15 bis 18, wobei das Reaktionsgemisch außerdem einen Kettenverlängerer umfasst.

20. Gegenstand nach einem der Ansprüche 1 bis 14, wobei der Gegenstand ein Fahrzeuginnenteil ist.

## Revendications

1. Article comprenant une section en mousse de polyuréthane à peau intégrée, formée en une seule étape d'injection à partir d'un mélange réactionnel comprenant :
a) au moins un polyisocyanate,
b) au moins un polyol,
c) et au moins un agent d'expansion de type carbamate,
dans lequel article la section en mousse de polyuréthane comporte au moins deux parties dont la première présente une première dureté de surface et la deuxième présente une deuxième dureté de surface, de valeur différente, et la dureté Asker C de la première partie vaut moins de 60.

2. Article conforme à la revendication 1, dans lequel la dureté Asker C de la deuxième partie vaut plus de 60.

3. Article conforme à la revendication 1 ou 2, dans lequel la dureté Asker C de la première partie vaut moins de 55.

4. Article conforme à l'une des revendications précédentes, dans lequel la dureté Asker C de la deuxième partie vaut plus de 65.

5. Article conforme à l'une des revendications précédentes, dans lequel la section en mousse possède un certain volume, la première partie de mousse de polyuréthane représente au moins 25 % du volume total de la section en mousse et la deuxième partie de mousse de polyuréthane représente au moins 10 % du volume total de la section en mousse.

6. Article comprenant une section en mousse de polyuréthane à peau intégrée, formée en une seule étape d'injection à partir d'un mélange réactionnel comprenant :
a) au moins un polyisocyanate,
b) au moins un polyol,
c) et au moins un agent d'expansion de type carbamate,
dans lequel article la section en mousse de polyuréthane comporte une première partie présentant une première épaisseur et une deuxième partie présentant une deuxième épaisseur, de valeur différente, et dans lequel la première partie présente une masse volumique moyenne inférieure à 500 g/L dans toute la première épaisseur et la deuxième partie présente une masse volumique moyenne supérieure à 600 g/L dans toute la deuxième épaisseur.

7. Article comprenant une section en mousse de polyuréthane à peau intégrée, formée en une seule étape d'injection à partir d'un mélange réactionnel comprenant :
a) au moins un polyisocyanate,
b) au moins un polyol,
c) et au moins un agent d'expansion de type carbamate,
dans lequel article la section en mousse de polyuréthane comporte au moins deux parties dont la première présente une première épaisseur et la deuxième présente une deuxième épaisseur, de valeur différente, et l'épaisseur de la première partie vaut plus de 15 mm alors que l'épaisseur de la deuxième partie vaut moins de 2 mm.

8. Article comprenant une section en mousse de polyuréthane à peau intégrée, formée en une seule étape d'injection à partir d'un mélange réactionnel comprenant :
a) au moins un polyisocyanate,
b) au moins un polyol,
c) et au moins un agent d'expansion de type carbamate,
dans lequel article la section en mousse de polyuréthane comporte au moins deux parties dont la première présente une première dureté de surface et la deuxième présente une deuxième dureté de surface, et la première dureté de surface est sensiblement différente de la deuxième dureté de surface.

9. Article conforme à la revendication 8, dans lequel la dureté de surface de la première partie diffère d'au moins 10 unités de mesure Asker C de la dureté de surface de la deuxième partie.

10. Article conforme à l'une des revendications précédentes, pour lequel le mélange réactionnel comprend en outre au moins un agent d'allongement des chaînes.

11. Article conforme à l'une des revendications précédentes, lequel article comprend en outre au moins l'un des éléments suivants : un substrat rigide et un revêtement appliqué dans le moule.

12. Article conforme à l'une des revendications précédentes, pour lequel le mélange réactionnel comprend en outre au moins un catalyseur.

13. Article conforme à l'une des revendications précédentes, pour lequel le polyol est un polyéther-polyol.

14. Article conforme à l'une des revendications précédentes, pour lequel le polyisocyanate est un isocyanate organique polyfonctionnel.

15. Procédé de fabrication d'un article comprenant une section en mousse de polyuréthane à peau intégrée, dans lequel article la section en mousse comporte des régions présentant des degrés différents de dureté,
dans lequel procédé la section en mousse de polyuréthane à peau intégrée est formée par injection d'un mélange réactionnel, en une seule étape d'injection, dans une cavité de moule fermée, lequel mélange réactionnel comprend
a) au moins un polyisocyanate,
b) au moins un polyol,
c) et au moins un agent d'expansion de type carbamate,
dans lequel procédé la cavité de moule comporte des régions d'épaisseurs différentes, si bien que la section en mousse comporte des régions présentant des duretés différentes, correspondant auxdites régions d'épaisseurs différentes.

16. Procédé conforme à la revendication 15, dans lequel l'une des régions de degrés différents de dureté obtenues présente une dureté Asker C de moins de 60 et une autre région présente une dureté Asker C de plus de 60.

17. Procédé conforme à la revendication 15 ou 16, qui comporte une étape consistant à mettre sur la surface interne du moule, avant l'injection du mélange réactionnel, au moins un revêtement appliqué dans le moule.

18. Procédé conforme à l'une des revendications 15 à 17, qui comporte une étape consistant à apporter un substrat rigide.

19. Procédé conforme à l'une des revendications 15 à 18, dans lequel le mélange réactionnel comprend en outre un agent d'allongement des chaînes.

20. Article conforme à l'une des revendications 1 à 14, lequel article est une pièce d'aménagement intérieur d'automobile.
